# EUROPEAN PATENT SPECIFICATION

(11) **EP 2 709 402 B1**
(45) Date of publication and mention of the grant of the patent: **09.08.2017**
(21) Application number: 12796082.1
(22) Date of filing: 07.06.2012
(51) Int. Cl.: H04W 28/08, H04W 72/04

(54) **METHOD AND APPARATUS FOR ALLOCATING CHANNELS FOR DOWNLINK TEMPORARY BLOCK FLOW**
VERFAHREN UND VORRICHTUNG ZUR KANALZUTEILUNG FÜR EINEN TEMPORÄREN DOWNLINK-BLOCKSTROM
PROCÉDÉ ET APPAREIL D'ALLOCATION DE CANAUX POUR UN FLUX DE BLOCS TEMPORAIRES DESCENDANTS

(30) Priority: 07.06.2011 CN 201110151373
(43) Date of publication of application: 19.03.2014
(73) Proprietor: Huawei Technologies Co., Ltd., Longgang District Shenzhen, Guangdong 518129 (CN)
(72) Inventor: YANG, Kai, Shenzhen Guangdong 518129 (CN)
(74) Representative: Körber, Martin Hans
(86) International application number: PCT/CN2012/076578
(87) International publication number: WO 2012/167734

(56) References cited:
- CN-A- 1 396 746
- CN-A- 101 827 397
- CN-A- 101 827 397
- CN-A- 101 848 522
- CN-A- 102 223 721
- US-A1- 2003 026 204

## Description

### TECHNICAL FIELD

The present invention relates to the field of radio communications technologies, and in particular, to a method and an apparatus for assigning channels to downlink temporary block flows TBFs.

### BACKGROUND

In a packet transmission process of a global system for mobile communications (GSM, Global System for Mobile Communications), a packet data channel (PDCH, Packet Data Channel) is a logical entity for carrying radio packet data on an air interface, a temporary block flow (TBF, Temporary Block Flow) is a connection between a user equipment and a radio access network side (hereinafter referred to as the access network side), and the user equipment and the access network side transmit packet service data on the PDCH through the TBF.

One or multiple PDCHs may be assigned to one TBF, and one PDCH may carry multiple TBFs.

For example, CN 101 827 397 A refers to a method and a device for building temporary block flow TBF. The method comprises the steps of triggering a flow of distributing channels for TBF at a network side; acquiring the maximum number of distributable channels of TBF according to the network loads at the network side and/or the type of the packet service; and designating the channels for the TBF within the range of the maximum number of the distributable channels at the network side to build TBF between mobile stations (MS).

At present, a manner of PDCH assignment for TBFs is as follows: 1. According to a multi-timeslot capability of a user of the user equipment, the access network side determines the number of PDCHs to be assigned. 2. From all PDCHs, a group of channels having good carrying capabilities and low multiplexing degrees is selected according to the multiplexing degrees of the PDCHs and the number of PDCHs to be assigned, and then the channel group is assigned to the TBFs; then the access network side sends the selected channel group and specified time to the user equipment through a downlink channel assignment (Packet Downlink Assignment) message, and the user equipment switches to the assigned channel group at the specified time to receive downlink packet service data, and if the user equipment receives downlink packet service data, it is considered that downlink TBFs are established successfully.

During the study and practice of the prior art, the inventor of the present invention finds that: although the preceding manner of PDCH assignment for TBFs can evenly assign TBFs to PDCHs, and make the number of TBFs carried on each PDCH basically balanced, the balance of the number of TBFs carried on each PDCH cannot ensure that data traffic sent by each PDCH is definitely balanced, and imbalance of data traffic may occur among the PDCHs; consequently, resources of some PDCHs are idle, while data traffic sent by other PDCHs is excessive, which deteriorates experience of users of TBFs carried on the PDCHs that send excessive data traffic.

### SUMMARY

Embodiments of the present invention provide a method and a corresponding apparatus for assigning channels to downlink temporary block flows.

A method for assigning channels to downlink temporary block flows includes:
when downlink packet service data arrives at an access network side, acquiring, by the access network side according to a buffered data amount, buffered at the access network side, of each downlink TBF carried on each packet data channel PDCH and mapping relationships between the downlink TBFs and the PDCHs, loads of the PDCHs, and selecting a PDCH having a light load from the PDCHs as a first PDCH, wherein the load of each PDCH is a sum of buffered data amounts of all downlink TBFs carried on the corresponding PDCH and the PDCH having the light load is a PDCH with the lightest load among the PDCHs or a PDCH whose load is lower than a threshold among the PDCHs; and
sending, to a user equipment, a first assignment message carrying information about the first PDCH, so that the user equipment receives the downlink packet service data on the first PDCH according to the first assignment message.

An apparatus for assigning channels to downlink temporary block flows is applied on an access network side and includes:
a first channel selecting unit, configured to: when downlink packet service data arrives at the access network side, acquire, by the access network side according to a buffered data amount, buffered at the access network side, of each downlink TBF carried on each packet data channel PDCH and mapping relationships between the downlink TBFs and the PDCHs, loads of the PDCHs, and select a PDCH having a light load from the PDCHs as a first PDCH, wherein the load of each PDCH is a sum of buffered data amounts of all downlink TBFs carried on the corresponding PDCH and the PDCH having the light load is a PDCH with the lightest load among the PDCHs or a PDCH whose load is lower than a threshold among the PDCHs; and
a first sending unit, configured to send, to a user equipment, a first assignment message carrying information about the first PDCH, so that the user equipment receives the downlink packet service data on the first PDCH according to the first assignment message.

In the embodiments of the present invention, when downlink packet service data arrives at an access network side, the access network side may acquire loads of the PDCHs according to a buffered data amount of each downlink TBF carried on each PDCH and mapping relationships between the downlink TBFs carried on the PDCHs and the packet data channels PDCHs, select a PDCH having a light load from the PDCHs as a first PDCH, and then send, to a user equipment, a first assignment message carrying information about the first PDCH, so that the user equipment switches to the first PDCH according to the first assignment message to receive downlink packet service data. The technical solutions provided by the embodiments of the present invention are capable of assigning the data amount to the PDCHs as evenly as possible during channel assignment, thereby increasing PDCH resource utilization, reducing multiplexing of packet services with large data amounts on the PDCHs, and improving service experience of users.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of an embodiment of a method for assigning channels to downlink temporary block flows according to an embodiment of the present invention;
FIG. 2 is a schematic flowchart of another embodiment of a method for assigning channels to downlink temporary block flows according to an embodiment of the present invention;
FIG. 3 is a schematic flowchart of another embodiment of a method for assigning channels to downlink temporary block flows according to an embodiment of the present invention;
FIG. 4 is a schematic flowchart of another embodiment of a method for assigning channels to downlink temporary block flows according to an embodiment of the present invention;
FIG. 5 is a schematic logical structural diagram of an embodiment of an apparatus for assigning channels to downlink temporary block flows according to an embodiment of the present invention;
FIG. 6 is a schematic logical structural diagram of another embodiment of an apparatus for assigning channels to downlink temporary block flows according to an embodiment of the present invention;
FIG. 7 is a schematic logical structural diagram of an embodiment of an apparatus for assigning channels to downlink temporary block flows according to an embodiment of the present invention; and
FIG. 8 is a schematic logical structural diagram of another embodiment of an apparatus for assigning channels to downlink temporary block flows according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The embodiments of the present invention provide a method for assigning channels to downlink temporary block flows. The embodiments of the present invention also provide a corresponding apparatus. The embodiments are hereinafter described in detail.

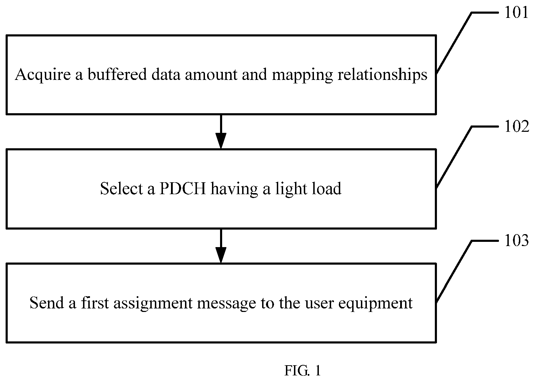

FIG. 1 illustrates an embodiment of a method for assigning channels to downlink temporary block flows according to an embodiment of the present invention, and the specific process includes the following:
101. When downlink packet service data arrives at an access network side, the access network side acquires a buffered data amount of each downlink TBF carried on each PDCH and mapping relationships between the downlink TBFs carried on the PDCHs and the PDCHs.

A downlink TBF is used to carry packet services between the access network side and a user equipment; the user equipment and the access network side establish a downlink TBF only when data needs to be transmitted between the user equipment and the access network side, where the procedure for establishing a downlink TBF is controlled by the access network side.

In this step, when downlink packet service data destined for a user equipment arrives at the access network side, the access network side acquires a buffered data amount of each downlink TBF carried on each PDCH and mapping relationships between the downlink TBFs carried on the PDCHs and the PDCHs. It should be noted that if a PDCH is in an idle state, the buffered data amount of each downlink TBF carried on the PDCH is zero.

In this document, the buffered data amount of each downlink TBF carried on each PDCH refers to a data amount of the downlink packet service data that is delivered by a core network, received by the access network side, but not sent to the user equipment yet through the downlink TBF carried on each PDCH, where the downlink packet service data is first buffered at the access network side before being sent to the user equipment. For example, the downlink packet service data is transmitted in the form of a protocol data unit (PDU, Protocal Data Unit) of a downlink packet service; after the core network receives the PDU, the core network transmits the PDU to the access network side; when the PDU arrives at the access network side and before the PDU is sent to the user equipment, the PDU is buffered at the access network side, where the data amount of the PDU is the buffered data amount of the downlink TBF carried on each PDCH.

In this embodiment, the access network side may be formed by a base transceiver station (BTS, Base Transceiver Station), a base station controller (BSC, Base Station Controller), and a packet control unit (PCU, Package Control Unit). In this scenario, the step of this embodiment may be executed by the base station controller.
102. Select a PDCH having a light load from the PDCHs as a first PDCH.

The access network side may acquire loads of the PDCHs according to the buffered data amount of each downlink TBF carried on each PDCH and mapping relationships between the downlink TBFs carried on the PDCHs and the PDCHs, which are acquired in step 101, and select a PDCH having a light load from the PDCHs as a first PDCH. In this document, the load of each PDCH is the sum of buffered data amounts of all downlink TBFs carried on the PDCH.

In this embodiment, the first PDCH may be a PDCH having the lightest load among the PDCHs, or may be any PDCH whose load is lower than a threshold among the PDCHs.

It should be noted that the first PDCH is a channel that the access network side assigns to the to-be-established TBF in this embodiment, and does not represent any limitation on the order or identifier of the PDCH.
103. Send, to the user equipment, a first assignment message carrying information about the first PDCH.

After the access network side selects the first PDCH, the access network sends, to the user equipment, a first assignment message carrying information about the first PDCH, so that the user equipment receives downlink packet service data on the first PDCH according to the first assignment message.

It should be noted that the first assignment message is used for the user equipment to receive downlink packet service data on the assigned channel according to the first assignment message, and does not represent any limitation on the order or identifier of the assignment message.

The assignment message may be a downlink channel assignment (Packet Downlink Assignment) message; the access network side sends the assigned PDCH to the user equipment through the downlink channel assignment (Packet Downlink Assignment) message. Generally, a downlink packet channel assignment message may further carry specified time information; after the user equipment receives the downlink packet channel assignment message, the user equipment receives downlink packet service data at the specified time from the PDCH assigned by the access network side; when the user equipment starts receiving downlink packet service data, the downlink TBF is established successfully.

In this embodiment, when downlink packet service data arrives at an access network side, the access network side acquires loads of the PDCHs according to a buffered data amount of each downlink TBF carried on each PDCH and mapping relationships between the downlink TBFs carried on the PDCHs and the packet data channels PDCHs, selects a first PDCH having a light load, and then sends a first assignment message to a user equipment, where the first assignment message carries information about the first PDCH, so that the user equipment receives downlink packet service data on the first PDCH according to the first assignment message. The technical solution provided by the embodiment of the present invention is capable of assigning the data amount to the PDCHs as evenly as possible during channel assignment, thereby increasing PDCH resource utilization, reducing multiplexing of packet services with large data amounts on the PDCHs, and improving service experience of users.

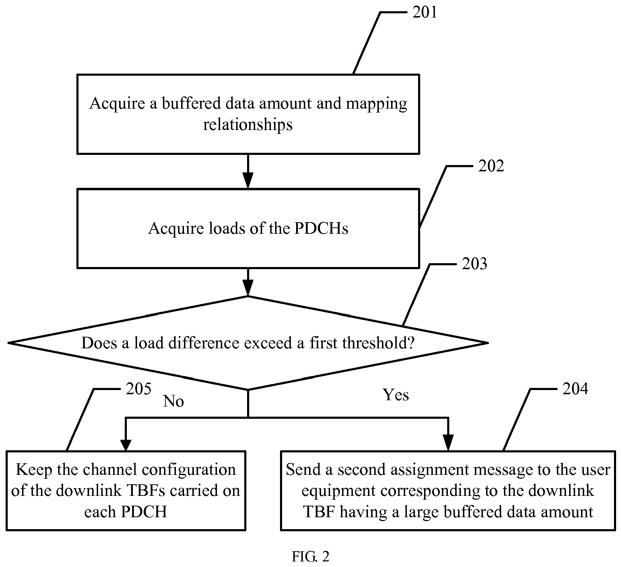

FIG. 2 illustrates another embodiment of a method for assigning channels to downlink temporary block flows according to an embodiment of the present invention, and details are as follows:
201. When channel reconfiguration is performed for downlink TBFs carried on each PDCH, acquire a buffered data amount of each downlink TBF carried on each PDCH and mapping relationships between the downlink TBFs carried on the PDCHs and the PDCHs.

In this embodiment, to fully use PDCH resources, the access network side may perform channel reconfiguration for downlink TBFs carried on each PDCH. For example, after establishing a downlink TBF for downlink packet service data (that is, after executing steps 101-103), the access network side may immediately perform a channel reconfiguration operation for the downlink TBFs carried on each PDCH; when load consumption occurs in the downlink TBFs carried on each PDCH, the access network side may also execute a channel reconfiguration operation for the downlink TBFs carried on each PDCH. In this embodiment, the access network side reconfigures a PDCH for carrying a downlink TBF having a large buffered data amount.

When channel reconfiguration is performed for downlink TBFs carried on each PDCH, the access network side acquires a buffered data amount of each downlink TBF carried on each PDCH and mapping relationships between the downlink TBFs carried on the PDCHs and the PDCHs.
202. Acquire loads of the PDCHs.
   The access network side acquires loads of the PDCHs according to the buffered data amount of each downlink TBF carried on each PDCH and mapping relationships between the downlink TBFs carried on the PDCHs and the PDCHs.
203. Acquire load differences between the PDCHs, determine whether a load difference in the load differences exceeds a first threshold, and if so, execute step 204, or otherwise, execute step 205.

The access network side acquires load differences between the PDCHs according to loads of the PDCHs in all PDCHs, and determines whether a load difference exceeds a first threshold. For example, assuming that four channels in a carrier are PDCHs, namely, TS0-TS1, TS5-TS7, the access network side may determine whether at least one load difference in the load differences between TS0 and TS1, between TS0 and TS5, between TS0 and TS7, between TS1 and TS5, between TS1 and TS7, and between TS5 and TS7 exceeds the first threshold. Generally, the first threshold may be acquired by debugging according to actual requirements, or acquired by emulation according to channel service conditions.

If a load difference in the load differences between PDCHs exceeds the first threshold, the access network side needs to perform channel reconfiguration for downlink TBFs carried on each PDCH. In this embodiment, the access network side adjusts a channel for carrying the downlink TBF having a large buffered data amount; the access network side executes step 204.

If no load difference in the load differences between PDCHs exceeds the first threshold, the access network side does not need to perform channel reconfiguration for downlink TBFs carried on each PDCH; the access network side executes step 205.
204. Select a PDCH having a light load as a second PDCH, and send a second assignment message to the user equipment corresponding to the downlink TBF having a large buffered data amount.

When the access network side needs to perform channel reconfiguration for downlink TBFs carried on each PDCH, the access network side selects a PDCH having a light load as a second PDCH, and sends a second assignment message to the user equipment corresponding to the downlink TBF having a large buffered data amount, where the second assignment message carries information about the second PDCH and information about the downlink TBF having a large buffered data amount, so that the user equipment learns that the access network side adjusts a channel, for carrying the downlink TBF having a large buffered data amount, to the second PDCH.

In this embodiment, the second PDCH may be a PDCH having the lightest load among the PDCHs, or may be any PDCH lower than a threshold among the PDCHs; the downlink TBF having a large buffered data amount may be a downlink TBF having the largest buffered data amount, or may be any downlink TBF whose load is higher than a threshold.

It should be noted that the second PDCH is a channel that the access network side reassigns for carrying a downlink TBF that has a large buffered data amount in this embodiment, and does not represent any limitation on the order or identifier of the PDCH. The second assignment message is used to make the user equipment learn the channel reassigned for carrying a downlink TBF that has a large buffered data amount, and does not represent any limitation on the order or identifier of the assignment message.
205. Keep the channel configuration of the downlink TBFs carried on each PDCH.

When the access network side does not need to perform channel reconfiguration for the downlink TBFs carried on each PDCH, the access network side keeps the channel configuration of the downlink TBFs carried on each PDCH.

In this embodiment, when a load difference in the load differences between PDCHs exceeds the first threshold, the access network side needs to perform channel reconfiguration for downlink TBFs carried on each PDCH; the access network side assigns a PDCH having a light load to the downlink TBF having a large buffered data amount; the technical solution provided by the embodiment of the present invention is capable of adjusting the channel configuration for downlink TBFs carried on each PDCH, basically assigning all data amounts to the PDCHs as evenly as possible, and fully using PDCH resources.

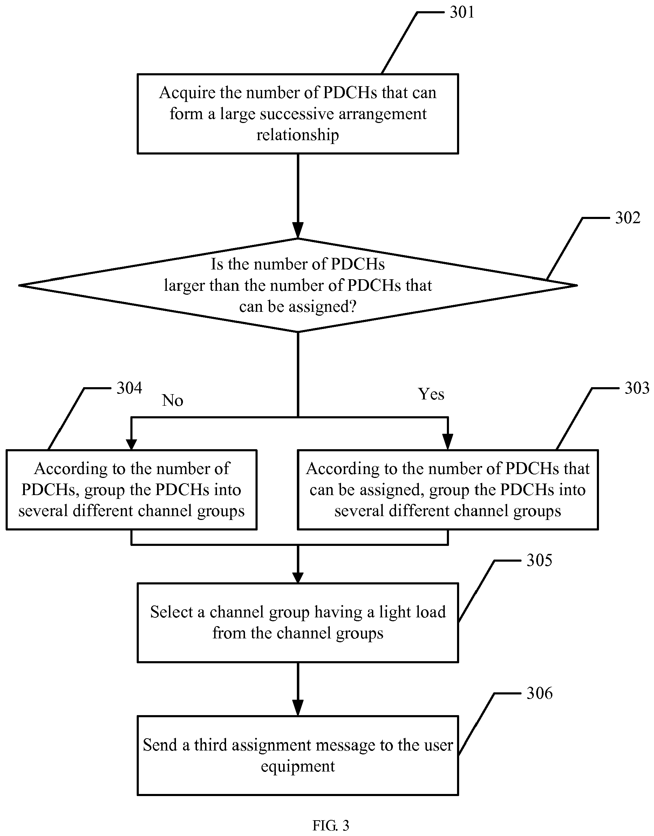

FIG. 3 illustrates another embodiment of a method for assigning channels to downlink temporary block flows; in this embodiment, the access network side may assign multiple PDCHs to one TBF, where the specific process may include the following:
301. When downlink packet service data arrives at an access network side, the access network side acquires, according to arrangement relationships between PDCHs, the number of PDCHs that can form a large successive arrangement relationship.

The GSM adopts a packet switching technology, and a channel provided by a carrier may be occupied by not only voice but also packet service data, but voice and packet service data cannot occupy the same channel; when the channel provided by a GSM carrier is not occupied by voice, the channel may transmit data in the form of packets, and the channels are PDCHs.

A carrier may provide eight channels, respectively indicated by channel numbers (TS, Time Slot) 0-7. According to the successive relationship of channel numbers, PDCHs have different arrangement relationships in the eight channels. For example, when TS0 and TS1 are not occupied by voice, the channel may transmit data in the form of packets; TS0 and TS1 are PDCHs; channel numbers of TS0 and TS1 are successive; the arrangement relationship between TS0 and TS1 is a successive arrangement relationship. For another example, when TS1 is occupied by voice but TS0 and TS2 are not occupied by voice, the channel may transmit data in the form of packets; TS0 and TS2 are PDCHs; channel numbers of TS0 and TS2 are discrete; the arrangement relationship between TS0 and TS2 is a discrete arrangement relationship.

In this step, when downlink packet service data arrives at the access network side, the access network side acquires, according to the arrangement relationship between PDCHs, the number of PDCHs that can form a large successive arrangement relationship. For example, five channels, namely, TS0, and TS4-TS7 are PDCHs, and the number of PDCHs that can form a large successive arrangement relationship is 4, where the large successive arrangement relationship is formed by TS4-TS7, that is, a successive arrangement relationship formed by many PDCHs with successive channel numbers.

In this embodiment, the number of PDCHs that can form a large successive arrangement relationship may be the number of PDCHs that can form the largest successive arrangement relationship, or may be the number of PDCHs that can form a successive arrangement relationship higher than a threshold.
302. Determine whether the number of PDCHs that can form a large successive arrangement relationship is larger than the number of PDCHs that can be assigned to downlink TBFs which is determined by a multi-timeslot capability of a user equipment; if so, execute step 303; if not, execute step 304.

When multiple PDCHs are assigned to one TBF, the transmission rate of downlink packet service data may be increased; when a downlink TBF is established, the downlink TBF expects to have more PDCHs assigned, but multiple PDCHs assigned to one downlink TBF must be successive.

In this step, the access network side determines whether the number of PDCHs that can form a large successive arrangement relationship in all PDCHs is larger than the number of PDCHs that can be assigned to downlink TBFs which is determined by a multi-timeslot capability of a user equipment; assuming that the user equipment is a mobile phone, the number of PDCHs that can be assigned to downlink TBFs which is determined by the multi-timeslot capability of the mobile phone is 4.

If so, it indicates that the number of PDCHs that can form a large successive arrangement relationship in all PDCHs is larger than the number of PDCHs that can be assigned to downlink TBFs which is determined by the multi-timeslot capability of the user equipment; in this case, the number of PDCHs that can be assigned to a downlink TBF is the number of PDCHs that can be assigned to downlink TBFs which is determined by the multi-timeslot capability of the user equipment, and the access network side executes step 303.

If not, it indicates that the number of PDCHs that can form a large successive arrangement relationship is smaller than or equal to the number of PDCHs that can be assigned to downlink TBFs which is determined by the multi-timeslot capability of the user equipment; in this case, the number of PDCHs that can be assigned to a downlink TBF is the number of PDCHs that can form a large successive arrangement relationship, and the access network side executes step 304.
303. Group the PDCHs into several different channel groups according to the number of PDCHs that can be assigned to downlink TBFs which is determined by the multi-timeslot capability of the user equipment.
   Assuming that eight channels in a carrier are all PDCHs, and that the number of PDCHs that can be assigned to downlink TBFs which is determined by the multi-timeslot capability of the user equipment (such as a mobile phone) is 4, all PDCHs may be grouped into five channel groups, which are respectively TS0-TS3, TS1-TS4, TS2-TS5, TS3-TS6, and TS4-TS7, where a successive arrangement relationship exists between PDCHs in each of the channel groups.
304. Group the PDCHs into several different channel groups according to the number of PDCHs that can form a large successive arrangement relationship.
   Assuming that four channels in a carrier are PDCHs, namely, TS0-TS1, and TS5-TS7, the number of PDCHs that can form a large successive arrangement relationship is 3, the number of PDCHs that can be assigned to downlink TBFs which is determined by the multi-timeslot capability of the user equipment (such as a mobile phone) is 4, and all PDCHs may be grouped into one channel group, namely TS5-TS7.
305. Acquire loads of the channel groups, and select a channel group having a light load from the channel groups as a first channel group.

After the access network side groups the channels into groups, the access network side acquires a buffered data amount of each downlink TBF carried on each PDCH and mapping relationships between the downlink TBFs carried on the PDCHs and the PDCHs, acquires loads of the channel groups acquired by grouping according to the buffered data amount of each downlink TBF carried on each PDCH and mapping relationships between the downlink TBFs carried on the PDCHs and the PDCHs, and selects a channel group having a light load from the channel groups as a first channel group.

In this embodiment, the first channel group having a light load may be a first channel group having the lightest load, or may be any channel group whose load is lower than a threshold.

It should be noted that the first channel group is a channel group that the access network side assigns to the to-be-established downlink TBF in this embodiment, and does not represent any limitation on the order or identifier of the channel group.
306. Send a third assignment message to the user equipment.

The access network side sends, to the user equipment, a third assignment message carrying information about the first channel group, so that the user equipment switches to the first channel group according to the third assignment message to receive downlink packet service data. The third assignment message is used to make the user equipment learn the channel group assigned to the to-be-established downlink TBF, and does not represent any limitation on the order or identifier of the assignment message.

In this embodiment, the access network side acquires, according to arrangement relationships between PDCHs, the number of PDCHs that can form a large successive arrangement relationship, groups, according to the comparison between the number of PDCHs that can form a large successive arrangement relationship and the number of PDCHs that can be assigned to downlink TBFs which is determined by the multi-timeslot capability of the user equipment, all PDCHs into several different channel groups formed by successive PDCHs, and assigns a channel group having a light load as a channel group of a to-be-established downlink TBF. The technical solution provided by the embodiment of the present invention is capable of assigning the data amount to the PDCHs as evenly as possible during channel assignment for the downlink TBFs, thereby increasing PDCH resource utilization, reducing multiplexing of packet services with large data amounts on the PDCHs, and improving service experience of users; in addition, the access network side assigns channel groups to the downlink TBFs, which can increase the transmission rate of downlink packet service data.

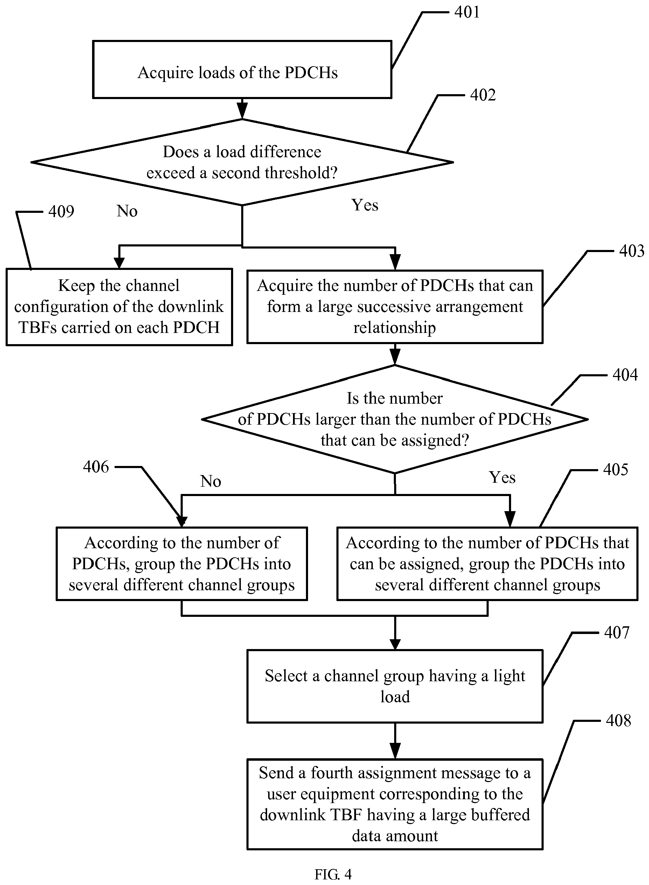

FIG. 4 illustrates another embodiment of a method for assigning channels to downlink temporary block flows according to an embodiment of the present invention; in this embodiment, an access network side performs channel readjustment for downlink TBFs carried on PDCHs, so that PDCH resources of a network are fully used, where the specific process of this embodiment includes the following:
401. When channel reconfiguration is performed for downlink TBFs carried on each PDCH, acquire a buffered data amount of each downlink TBF carried on each PDCH and mapping relationships between the downlink TBFs carried on the PDCHs and the PDCHs, and acquire loads of the PDCHs.

In this embodiment, to fully use PDCH resources, the access network side may perform channel reconfiguration for downlink TBFs carried on each PDCH. For example, after establishing a downlink TBF for downlink packet service data (that is, after executing steps 301-306), the access network side may immediately perform a channel reconfiguration operation for the downlink TBFs carried on each PDCH; when load consumption occurs in the downlink TBFs carried on each PDCH, the access network side may also execute a channel reconfiguration operation for the downlink TBFs carried on each PDCH. The access network side adjusts a PDCH for carrying a downlink TBF having a large buffered data amount; in this embodiment, the downlink TBF having a large buffered data amount may be a downlink TBF having the largest buffered data amount, or may be any downlink TBF whose load is higher than a threshold.

When channel reconfiguration is performed for downlink TBFs carried on each PDCH, the access network side acquires a buffered data amount of each downlink TBF carried on each PDCH and mapping relationships between the downlink TBFs carried on the PDCHs and the PDCHs.

The access network side acquires loads of the PDCHs according to a buffered data amount of each downlink TBF carried on each PDCH and mapping relationships between the downlink TBFs carried on the PDCHs and the PDCHs.
402. Determine, according to the loads of the PDCHs, whether a load difference in load differences between the PDCHs exceeds a second threshold, and if so, execute steps 403-407, or if not, execute step 409.
   Generally, the second threshold may be acquired by debugging according to actual requirements, or acquired by emulation according to channel service conditions.
403. Acquire, according to arrangement relationships between PDCHs, the number of PDCHs that can form a large successive arrangement relationship.
404-406. The steps are the same as steps 302-304 and are not further described herein.
407. Acquire loads of the channel groups according to the loads of the PDCHs, and select a channel group having a light load from the channel groups as a second channel group.

After grouping channel groups, the access network side acquires loads of the channel groups according to the loads of the PDCHs acquired in step 401, and selects a channel group having a light load as a second channel group.

In this embodiment, the second channel group having a light load may be a second channel group having the lightest load, or may be any channel group lower than a threshold.

It should be noted that the second channel group is a channel group that the access network side reassigns to the established downlink TBF in this embodiment, and does not represent any limitation on the order or identifier of the channel group.
408. Send a fourth assignment message to a user equipment corresponding to the downlink TBF having a large buffered data amount.

The access network side sends a fourth assignment message to a user equipment, where the user equipment transmits downlink packet service data through a downlink TBF having a large buffered data amount. The fourth assignment message carries information about the second channel group and information about the downlink TBF having a large buffered data amount, so that the user equipment learns that the access network side adjusts a channel, for carrying the downlink TBF having a large buffered data amount, to the second channel group.

The fourth assignment message is used to make the user equipment learn the channel group reassigned to the established downlink TBF, and does not represent any limitation on the order or identifier of the assignment message.
409. Keep the channel configuration of the downlink TBFs carried on each PDCH.

When the access network side does not need to perform channel reconfiguration for the downlink TBFs carried on each PDCH, the access network side keeps the channel configuration of the downlink TBFs carried on each PDCH.

In this embodiment, when a load difference in the load differences between PDCHs exceeds a second threshold, the access network side needs to perform channel reconfiguration for downlink TBFs carried on each PDCH; the access network side selects a second channel group having a light load from the channel groups and sets the second channel group as a reassigned channel for carrying the downlink TBF having a large buffered data amount. The technical solution provided by the embodiment of the present invention is capable of adjusting the channels of downlink TBFs carried on each PDCH, basically assigning all data amounts to the PDCHs as evenly as possible, and fully using PDCH resources.

For ease of understanding, the following uses two specific application scenarios as an example to describe the method for assigning channels to downlink temporary block flows in the embodiment of the present invention. For the two application scenarios, reference may be made to steps 301-306 and steps 401-409.

The first application scenario is: When downlink packet service data arrives at the access network side, the access network side assigns a channel group to a to-be-established downlink TBF, where the specific process is as follows:

Eight channels TS0-TS7 of a carrier are all PDCHs. The access network side acquires a buffered data amount of each downlink TBF carried on each PDCH and mapping relationships between the downlink TBFs carried on the PDCHs and the PDCHs, and acquires loads of the PDCHs according to the buffered data amount of each downlink TBF carried on each PDCH and mapping relationships between the downlink TBFs carried on the PDCHs and the PDCHs. Specifically, TS0-TS3 carry two downlink TBFs, that is, downlink TBF 1 and downlink TBF 2, and TS4-TS7 carry two downlink TBFs, that is, downlink TBF 3 and downlink TBF 4; the buffered data amount of downlink TBF 1 is 1200 Kbytes, and the buffered data amount of downlink TBF 2 is 3600 Kbytes; a load of each PDCH in TS0-TS3 is 1200 Kbytes/4 + 3600 Kbytes/4 = 1200 Kbytes; the buffered data amount of downlink TBF 3 is 400 Kbytes; the buffered data amount of downlink TBF 4 is 800 Kbytes; and a load of each PDCH in TS4-TS7 is 400 Kbytes/4 + 800Kbytes/4 = 300Kbytes.

The access network side acquires, according to arrangement relationships between PDCHs, the number of PDCHs that can form a large successive arrangement relationship, where the number is 8; the user equipment is a mobile phone; the number of PDCHs that can be assigned to downlink TBFs which is determined by a multi-timeslot capability of the user equipment is 4. Because the number of PDCHs that can form a large successive arrangement relationship is larger than the number of PDCHs that can be assigned to downlink TBFs which is determined by the multi-timeslot capability of the user equipment, the access network side groups, according to the number of PDCHs that can be assigned to downlink TBFs which is determined by the multi-timeslot capability of the user equipment, all the PDCHs into several different channel groups, where PDCHs in each of the channel groups are successive. The PDCHs may be grouped into five channel groups, which are respectively TS0-TS3, TS1-TS4, TS2-TS5, TS3-TS6, and TS4-TS7.

After the access network side acquires the five channel groups, the access network side acquires loads of channel groups TS0-TS3, TS1-TS4, TS2-TS5, TS3-TS6, and TS4-TS7 according to the loads of the PDCHs, where the loads are respectively 4800 Kbytes, 3900 Kbytes, 3000 Kbytes, 2100 Kbytes, and 1200 Kbytes, and selects a channel group having a light load: TS4-TS7; the access network side sends downlink channel assignment information to the mobile phone, so that the mobile phone receives downlink packet service data on the channel group TS4-TS7.

The access network side acquires, according to arrangement relationships between PDCHs, the number of PDCHs that can form a large successive arrangement relationship, groups, according to the comparison between the number of PDCHs that can form a large successive arrangement relationship and the number of PDCHs that can be assigned to downlink TBFs which is determined by the multi-timeslot capability of the user equipment, all PDCHs into several different channel groups formed by successive PDCHs, and assigns a channel group having a light load as a channel group of a to-be-established downlink TBF. Therefore, the technical solution is capable of assigning the data amount to the PDCHs as evenly as possible during channel assignment for the downlink TBFs, thereby increasing PDCH resource utilization, reducing multiplexing of packet services with large data amounts on the PDCHs, and improving service experience of users; in addition, the access network side assigns channel groups to the downlink TBFs, which can increase the transmission rate of downlink packet service data.

The second application scenario is: To fully use PDCH resources of the network, the access network side performs channel readjustment for the downlink TBFs carried on the PDCHs.

Eight channels TS0-TS7 of a carrier are all PDCHs. The access network side acquires a buffered data amount of each downlink TBF carried on each PDCH and mapping relationships between the downlink TBFs carried on the PDCHs and the PDCHs. Specifically, TS0-TS3 carry three downlink TBFs, that is, downlinks TBF 5 and TBF 6 and TBF 7; TS4-TS7 carry two downlink TBFs, that is, downlinks TBF 8 and TBF 9. The buffered data amount of downlink TBF 5 is 3600 Kbytes; the buffered data amount of downlink TBF 6 is 1200 Kbytes; the buffered data amount of downlink TBF 7 is 4000 Kbytes; the buffered data amount of downlink TBF 8 is 800 Kbytes; and the buffered data amount of downlink TBF 9 is 400 Kbytes.

The loads of the PDCHs are acquired according to the buffered data amount of each downlink TBF carried on each PDCH and mapping relationships between the downlink TBFs carried on the PDCHs and the PDCHs, specifically:
a load of each PDCH in TS0-TS3 is:
   1200 Kbytes/4 + 3600 Kbytes/4 + 4000 Kbytes/4 = 2200 Kbytes;
a load of each PDCH in TS4-TS7 is:
   400 Kbytes/4 + 800 Kbytes/4 = 300 Kbytes.

A threshold is set to 1500 Kbytes. In all PDCHs, the access network side acquires load differences between the PDCHs according to the loads of the PDCHs, where a load difference in the load differences between the PDCHs exceeds a threshold.

The access network side acquires according to arrangement relationships between PDCHs, and acquires the number of PDCHs that can form a large successive arrangement relationship, where the number is 8; the user equipment is a mobile phone; the number of PDCHs that can be assigned to downlink TBFs which is determined by a multi-timeslot capability of the user equipment is 4. Because the number of PDCHs that can form a large successive arrangement relationship, which is acquired according to the arrangement relationships between PDCHs, is larger than the number of PDCHs that can be assigned to downlink TBFs which is determined by the multi-timeslot capability of the user equipment, the access network side groups, according to the number of PDCHs that can be assigned to downlink TBFs which is determined by the multi-timeslot capability of the user equipment, all the PDCHs into several different channel groups, where PDCHs in each of the channel groups are successive. The PDCHs may be grouped into five channel groups, which are respectively TS0-TS3, TS1-TS4, TS2-TS5, TS3-TS6, and TS4-TS7.

After the access network side acquires the five channel groups, the access network side acquires loads of the channel groups. Loads corresponding to channel groups TS0-TS3, TS1-TS4, TS2-TS5, TS3-TS6, and TS4-TS7 are respectively 8800 Kbytes, 6900 Kbytes, 5000 Kbytes, 3100 Kbytes, and 1200 Kbytes. The access network side selects the channel group TS4-TS7 having a light load, and selects downlink TBF 7 having a large buffered data amount to transmit downlink packet service data to the mobile phone; the access network side sends a downlink packet channel assignment message to the mobile phone, so that the mobile phone learns that the access network side adjusts the channel of downlink TBF 7 to the channel group TS4-TS7.

When a load difference in the load differences between PDCHs exceeds a threshold, the access network side needs to perform channel reconfiguration for downlink TBFs carried on each PDCH; the access network side selects a channel group having a light load from the channel groups and sets the channel group as a reassigned channel for carrying the downlink TBF having a large buffered data amount. The technical solution is capable of adjusting the channels of downlink TBFs carried on each PDCH, thereby basically assigning all data amounts to the PDCHs as evenly as possible, and fully using PDCH resources.

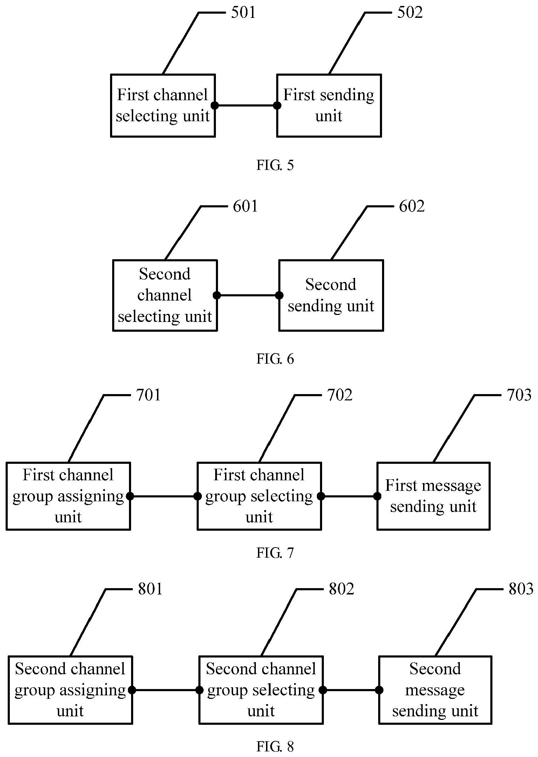

FIG. 5 illustrates an embodiment of an apparatus for assigning channels to downlink temporary block flows according to an embodiment of the present invention, where the apparatus is applied on an access network side. The apparatus in this embodiment may be configured to implement the method embodiment provided by steps 101-103, that is, execute the actions implemented by the access network side in this method. The apparatus includes:
a first channel selecting unit 501, configured to: when downlink packet service data arrives at the access network side, acquire, by the access network side according to a buffered data amount of each downlink TBF carried on each packet data channel PDCH and mapping relationships between the downlink TBFs and the PDCHs, loads of the PDCHs, and select a PDCH having a light load from the PDCHs as a first PDCH; and
a first sending unit 502, configured to send, to a user equipment, a first assignment message carrying information about the first PDCH, so that the user equipment receives the downlink packet service data on the first PDCH according to the first assignment message.

The apparatus for assigning channels to downlink temporary block flows according to this embodiment may be a base station controller.

In this embodiment, the apparatus for establishing a downlink temporary block flow is capable of assigning the data amount to the PDCHs as evenly as possible during channel assignment for a to-be-established downlink TBF, thereby increasing PDCH resource utilization, thereby reducing multiplexing of packet services with large data amounts on the PDCHs, and improving service experience of users.

FIG. 6 illustrates another embodiment of an apparatus for assigning channels to downlink temporary block flows according to an embodiment of the present invention, where the apparatus is applied on an access network side. The apparatus in this embodiment may be configured to implement the method embodiment provided by steps 201-205, that is, execute the actions implemented by the access network side in this method. The apparatus includes:
a second channel selecting unit 601, configured to: when channel reconfiguration is performed for downlink TBFs carried on each packet data channel PDCH, acquire loads of the PDCHs according to a buffered data amount of each downlink TBF carried on each PDCH and mapping relationships between the downlink TBFs and the PDCHs; and
if a load difference in load differences between the PDCHs exceeds a first threshold, select a PDCH having a light load from the PDCHs as a second PDCH; and
a second sending unit 602, configured to send a second assignment message to a user equipment corresponding to a downlink TBF having a large buffered data amount, where the second assignment message carries information about the second PDCH and information about the downlink TBF having a large buffered data amount, so that the user equipment learns that the access network side adjusts a channel, for carrying the downlink TBF having a large buffered data amount, to the second PDCH.

The apparatus for assigning channels to downlink temporary block flows according to this embodiment may be a base station controller.

In this embodiment, the apparatus for assigning channels to downlink temporary block flows is capable of adjusting the channels assigned to downlink TBFs carried on each PDCH, thereby basically assigning all data amounts to the PDCHs as evenly as possible, and fully using PDCH resources.

FIG. 7 illustrates another embodiment of an apparatus for assigning channels to downlink temporary block flows according to an embodiment of the present invention, where the apparatus is applied on an access network side. The apparatus in this embodiment may be configured to implement the method embodiment provided by steps 301-306, that is, execute the actions implemented by the access network side in this method. The apparatus includes:
a first channel group assigning unit 701, configured to: when downlink packet service data arrives at the access network side, acquire, by the access network side according to arrangement relationships between packet data channels PDCHs, the number of PDCHs that can form a large successive arrangement relationship; if the number of PDCHs that can form a large successive arrangement relationship is larger than the number of PDCHs that can be assigned to downlink TBFs which is determined by a multi-timeslot capability of a user equipment, group the PDCHs into several different channel groups according to the number of PDCHs that can be assigned to downlink TBFs which is determined by the multi-timeslot capability of the user equipment, where a successive arrangement relationship exists between PDCHs in each of the channel groups; and if the number of PDCHs that can form a large successive arrangement relationship is smaller than or equal to the number of PDCHs that can be assigned to downlink TBFs which is determined by the multi-timeslot capability of the user equipment, group the PDCHs into several different channel groups according to the number of PDCHs that can form a large successive arrangement relationship, where a successive arrangement relationship exists between PDCHs in each of the channel groups;
a first channel group selecting unit 702, configured to acquire loads of the channel groups according to a buffered data amount of each downlink TBF carried on each PDCH and mapping relationships between the downlink TBFs and the PDCHs, and select a channel group having a light load from the channel groups as a first channel group; and
a first message sending unit 703, configured to send, to the user equipment, a third assignment message carrying information about the first channel group, so that the user equipment receives the downlink packet service data on the first channel group according to the third assignment message.

In this embodiment, the apparatus for assigning channels to downlink temporary block flows is capable of assigning the data amount to the PDCHs as evenly as possible during channel assignment for a to-be-established downlink TBF, thereby increasing PDCH resource utilization, reducing multiplexing of packet services with large data amounts on the PDCHs, and improving service experience of users; in addition, the access network side assigns channel groups to a to-be-established downlink TBF, which can increase the transmission rate of downlink packet service data.

FIG. 8 illustrates another embodiment of an apparatus for assigning channels to downlink temporary block flows according to an embodiment of the present invention, where the apparatus is applied on an access network side. The apparatus in this embodiment may be configured to implement the method embodiment provided by steps 401-409, that is, execute the actions implemented by the access network side in this method. The apparatus includes:
a second channel group assigning unit 801, configured to: when channel reconfiguration is performed for downlink TBFs carried on each PDCH, acquire, by the access network side according to a buffered data amount of each downlink TBF carried on each PDCH and mapping relationships between the downlink TBFs and the PDCHs, loads of the PDCHs;
if a load difference in load differences between the PDCHs exceeds a second threshold, acquire, according to arrangement relationships between the PDCHs, the number of PDCHs that can form a large successive arrangement relationship;
if the number of PDCHs that can form a large successive arrangement relationship is larger than the number of PDCHs that can be assigned to downlink TBFs which is determined by a multi-timeslot capability of a user equipment, group the PDCHs into several different channel groups according to the number of PDCHs that can be assigned to downlink TBFs which is determined by the multi-timeslot capability of the user equipment, where a successive arrangement relationship exists between PDCHs in each of the channel groups; and
if the number of PDCHs that can form a large successive arrangement relationship is smaller than or equal to the number of PDCHs that can be assigned to downlink TBFs which is determined by the multi-timeslot capability of the user equipment, group the PDCHs into several different channel groups according to the number of PDCHs that can form a large successive arrangement relationship, where a successive arrangement relationship exists between PDCHs in each of the channel groups;
a second channel group selecting unit 802, configured to acquire loads of the channel groups according to the loads of the PDCHs, and select a channel group having a light load from the channel groups as a second channel group; and
a second message sending unit 803, configured to send a fourth assignment message to a user equipment corresponding to a downlink TBF having a large buffered data amount, where the fourth assignment message carries information about the second channel group and information about the downlink TBF having a large buffered data amount, so that the user equipment learns that the access network side adjusts a channel, for carrying the downlink TBF having a large buffered data amount, to the second channel group.

In this embodiment, the apparatus for assigning channels to downlink temporary block flows is capable of adjusting the channels assigned to each downlink TBF carried on each PDCH, thereby basically assigning all data amounts to the PDCHs as evenly as possible, and fully using PDCH resources.

Persons of ordinary skill in the art may understand that all or part of the steps of the methods in the foregoing embodiments may be implemented by a computer program instructing relevant hardware. The program may be stored in a computer readable storage medium. The storage medium may include a ROM, a RAM, a magnetic disk, or an optical disk.

Detailed above are a method and a corresponding apparatus for assigning channels to downlink temporary block flows according to the embodiments of the present invention. Although the principle and implementation of the present invention are described with reference to exemplary embodiments, the embodiments are only intended to help understand the method and core idea of the present invention. In addition, with respect to the implementation and application scope of the present invention, modifications and variations may be made by persons of ordinary skill in the art according to the idea of the present invention. Therefore, the content of the specification shall not be construed as a limitation on the present invention.

## Claims

1. A method for assigning channels to downlink temporary block flows TBFs, comprising:
a.) when downlink packet service data arrive at an access network side, acquiring (101), by the access network side according to a buffered data amount, buffered at the access network side, of each downlink TBF carried on each packet data channel PDCH and according to mapping relationships between the downlink TBFs and the PDCHs, loads of the PDCHs, and selecting (102) a PDCH having a light load from the PDCHs as a first PDCH, wherein the load of each PDCH is a sum of buffered data amounts of all downlink TBFs carried on the corresponding PDCH and the PDCH having the light load is a PDCH with the lightest load among the PDCHs or a PDCH whose load is lower than a threshold among the PDCHs; and
b.) sending (103), to a user equipment, a first assignment message carrying information about the first PDCH, so that the user equipment receives the downlink packet service data on the first PDCH according to the first assignment message.

2. The method according to claim 1, wherein the sending (103), to a user equipment, a first assignment message carrying information about the first PDCH specifically comprises:
sending a downlink packet channel assignment Packet Downlink Assignment message carrying the information about the first PDCH to the user equipment.

3. An apparatus for assigning channels to downlink temporary block flows TBFs, applied on an access network side and comprising:
a first channel selecting unit (501), configured to: when downlink packet service data arrives at the access network side, acquire, according to a buffered data amount, buffered at the access network side, of each downlink TBF carried on each packet data channel PDCH and according to relationships between the downlink TBFs and the PDCHs, loads of the PDCHs, and select a PDCH having a light load from the PDCHs as a first PDCH, wherein the load of each PDCH is a sum of buffered data amounts of all downlink TBFs carried on the corresponding PDCH and the PDCH having the light load is a PDCH with the lightest load among the PDCHs or a PDCH whose load is lower than a threshold among the PDCHs; and
a first sending unit (502), configured to send a first assignment message carrying information about the first PDCH to a user equipment, so that the user equipment receives the downlink packet service data on the first PDCH according to the first assignment message.

## Patentansprüche

1. Verfahren zum Zuteilen von Kanälen zu temporären Downlink-Blockströmen (Temporary Block Flows, TBFs), umfassend:
a.) wenn Downlink-Paketdienstdaten auf einer Zugangsnetzwerkseite ankommen, Erfassen (101), durch die Zugangsnetzwerkseite gemäß einer Menge gepufferter Daten, die auf der Zugangsnetzwerkseite gepuffert sind, von jedem Downlink-TBF, der auf jedem Paketdatenkanal (Packet Data Channel, PDCH) übertragen wird und gemäß den Zuordnungsbeziehungen zwischen den Downlink-TBFs und den PDCHs, der Lasten der PDCHs, und Auswählen (102) eines PDCH mit einer leichten Last aus den PDCHs als einen ersten PDCH, wobei die Last jedes PDCH eine Summe von Mengen gepufferter Daten aller Downlink-TBFs ist, die auf dem entsprechenden PDCH übertragen werden, und wobei der PDCH mit der leichten Last ein PDCH mit der leichtesten Last unter den PDCHs ist oder ein PDCH ist, dessen Last niedriger als ein Schwellenwert unter den PDCHs ist; und
b.) Senden (103) an ein Benutzergerät, einer ersten Zuteilungsnachricht, die Informationen über den ersten PDCH überträgt, sodass das Benutzergerät die Downlink-Paketdienstdaten auf dem ersten PDCH gemäß der ersten Zuteilungsnachricht empfängt.

2. Verfahren nach Anspruch 1, wobei das Senden (103), an ein Benutzergerät, einer ersten Zuteilungsnachricht, die Informationen über den ersten PDCH überträgt, insbesondere umfasst:
Senden einer Downlink-Paketkanal-Zuteilung-Paket-Downlink-Zuteilungsnachricht, welche die Informationen über den ersten PDCH an das Benutzergerät überträgt.

3. Vorrichtung zum Zuteilen von Kanälen zu temporären Downlink-Blockströmen (Temporary Block Flows, TBFs), die auf einer Zugangsnetzwerkseite angewendet werden und umfassen:
eine erste Kanalauswahleinheit (501), die konfiguriert ist, um: wenn Downlink-Paketdienstdaten auf der Zugangsnetzwerkseite ankommen, gemäß einer Menge gepufferter Daten, die auf der Zugangsnetzwerkseite gepuffert sind, von jedem Downlink-TBF, der auf jedem Paketdatenkanal (Packet Data Channel, PDCH) übertragen wird und gemäß den Beziehungen zwischen den Downlink-TBFs und den PDCHs, die Lasten der PDCHs zu erfassen und einen PDCH mit einer leichten Last von den PDCHs als einen ersten PDCH auszuwählen, wobei die Last jedes PDCH eine Summe von Mengen gepufferter Daten aller Downlink-TBFs ist, die auf dem entsprechenden PDCH übertragen werden, und wobei der PDCH mit der leichten Last ein PDCH mit der leichtesten Last unter den PDCHs ist oder ein PDCH ist, dessen Last niedriger als ein Schwellenwert unter den PDCHs ist; und
eine erste Sendeeinheit (502), die konfiguriert ist, um eine erste Zuteilungsnachricht zu senden, die Informationen über den ersten PDCH an ein Benutzergerät überträgt, sodass das Benutzergerät die Downlink-Paketdienstdaten auf dem ersten PDCH gemäß der ersten Zuteilungsnachricht empfängt.

## Revendications

1. Procédé pour attribuer des canaux à des flux de blocs temporaires (TBF) de liaison descendante, consistant :
a) lorsque des données de service de paquet de liaison descendante arrivent côté réseau d'accès, à acquérir (101), par le côté réseau d'accès en fonction d'une quantité de données mises en mémoire tampon, qui sont mises en mémoire tampon côté réseau d'accès, de chaque flux TBF de liaison descendante transporté sur chaque canal de données de paquet (PDCH) et en fonction de relations de mise en correspondance entre les flux TBF de liaison descendante et les canaux PDCH, les charges des canaux PDCH et à sélectionner (102) un canal PDCH ayant une charge légère parmi les canaux PDCH comme étant un premier canal PDCH, dans lequel la charge de chaque canal PDCH est une somme de quantités de données mises en mémoire tampon de tous les flux TBF de liaison descendante transportés sur le canal PDCH correspondant et le canal PDCH ayant la charge légère est un canal PDCH ayant la charge la plus légère parmi les canaux PDCH ou un canal PDCH dont la charge est inférieure à un seuil, parmi les canaux PDCH ; et
b) envoyer (103), à un équipement utilisateur, un premier message d'attribution comportant des informations concernant le premier canal PDCH de telle sorte que l'équipement utilisateur reçoive les données de service de paquet de liaison descendante sur le premier canal PDCH en fonction du premier message d'attribution.

2. Procédé selon la revendication 1, dans lequel l'envoi (103), à un équipement utilisateur, d'un premier message d'attribution comportant des informations concernant le premier canal PDCH, consiste en particulier à :
envoyer un message d'attribution de liaison descendante de paquet d'attribution de canal de paquet de liaison descendante comportant les informations concernant le premier canal PDCH à l'équipement utilisateur.

3. Appareil pour attribuer des canaux à des flux de blocs temporaires (TBF) de liaison descendante appliqués côté réseau d'accès et comprenant :
une première unité de sélection de canal (501) configurée, lorsque des données de service de paquet de liaison descendante arrivent côté réseau d'accès, pour acquérir, en fonction d'une quantité de données mises en mémoire tampon, qui sont mises en mémoire tampon côté réseau d'accès, de chaque flux TBF de liaison descendante transporté sur chaque canal de données de paquet (PDCH) et en fonction de relations entre les flux TBF de liaison descendante et les canaux PDCH, les charges des canaux PDCH et pour sélectionner un canal PDCH ayant une charge légère parmi les canaux PDCH comme étant un premier canal PDCH, dans lequel la charge de chaque canal PDCH est une somme de quantités de données mises en mémoire tampon de tous les flux TBF de liaison descendante transportés sur le canal PDCH correspondant et le canal PDCH ayant la charge légère est un canal PDCH ayant la charge la plus légère parmi les canaux PDCH ou un canal PDCH dont la charge est inférieure à un seuil, parmi les canaux PDCH ; et
une première unité d'envoi (502), configurée pour envoyer un premier message d'attribution comportant des informations concernant le premier canal PDCH à un équipement utilisateur de telle sorte que l'équipement utilisateur reçoive les données de service de paquet de liaison descendante sur le premier canal PDCH en fonction du premier message d'attribution.
